# EUROPEAN PATENT APPLICATION

(11) **EP 3 603 958 A1**
(43) Date of publication of application: **05.02.2020**
(21) Application number: 18778270.1
(22) Date of filing: 28.03.2018
(51) Int. Cl.: B32B 25/14

(54) **RUBBER LAMINATE**

(30) Priority: 30.03.2017 JP 2017069242
(71) Applicant: Zeon Corporation, Tokyo 100-8246 (JP)
(72) Inventor: NARITA, Tomoyuki, Tokyo 100-8246 (JP)
(74) Representative: Maiwald Patent- und Rechtsanwaltsgesellschaft mbH
(86) International application number: PCT/JP2018/012806
(87) International publication number: WO 2018/181493

(57) **Abstract**

A rubber laminate where an acrylic rubber layer (A) including an acrylic rubber composition including at least a carboxyl group-containing acrylic rubber and an aliphatic polyvalent amine compound or a derivative thereof and a fluororubber layer (B) including a fluororubber composition including at least a polyol-cross-linkable fluororubber and a bismuth oxide are made to adhere to one another through cross-linking.

## Description

### TECHNICAL FIELD

The present invention relates to a rubber laminate.

### BACKGROUND ART

In the prior art, a rubber laminate, obtained from laminating a rubber having satisfactory heat resistance and oil resistance, such as a fluororubber, and a rubber having satisfactory cold resistance and weather resistance, such as an acrylic rubber, has been known.

For example, Patent Document 1 discloses a heat-resistant hose for a vehicle formed by an outer layer where an aromatic polyvalent amine is added as a cross-linking agent to an acrylic rubber and an inner layer where both magnesium oxide and calcium hydroxide are used as acid acceptors to a fluororubber.

### PRIOR ART DOCUMENTS

### PATENT DOCUMENTS

Patent Document 1: Japanese Laid-Open Patent Application No. 2012-187852

### SUMMARY OF THE INVENTION

### PROBLEM TO BE SOLVED BY THE INVENTION

However, such a rubber laminate of the prior art is not satisfactory in both acid resistance and adhesiveness.

An object of the present invention is to provide a rubber laminate satisfactory in both acid resistance and adhesiveness.

### MEANS FOR SOLVING THE PROBLEM

In order to solve the above-described problem, according to one aspect of the present invention, an acrylic rubber layer (A) including an acrylic rubber composition containing at least a carboxyl group-containing acrylic rubber and an aliphatic polyvalent amine compound or a derivative thereof and a fluororubber layer (B) including a fluororubber composition containing at least a polyol-cross-linkable fluororubber and a bismuth oxide are made to adhere to one another through cross-linking.

### ADVANTAGEOUS EFFECT OF THE INVENTION

Thanks to the aspect of the present invention, a rubber laminate satisfactory in both acid resistance and adhesiveness can be provided.

### MODES FOR CARRYING OUT THE INVENTION

Below, modes for carrying out the present invention will be described in detail. In a rubber laminate according to the present invention, an acrylic rubber layer (A) including an acrylic rubber composition containing at least a carboxyl group-containing acrylic rubber and an aliphatic polyvalent amine compound or a derivative thereof and a fluororubber layer (B) including a fluororubber composition containing at least a polyol-cross-linkable fluororubber and a bismuth oxide are made to adhere to one another through cross-linking.

### <Acrylic rubber layer (A)>

### <Acrylic rubber composition>

First, an acrylic rubber composition for forming an acrylic rubber layer (A) of a rubber laminate according to the present invention will be described. An acrylic rubber composition for forming an acrylic rubber layer (A) to be used in the present invention contains at least a carboxyl group-containing acrylic rubber and an aliphatic polyvalent amine compound or derivative thereof. According to the present invention, by using a carboxyl group-containing acrylic rubber as an acrylic rubber for an acrylic rubber layer (A), because a carboxyl group-containing acrylic rubber is particularly satisfactory in heat resistance, the heat resistance of the ultimately obtained rubber laminate can be improved.

### <Carboxyl group-containing acrylic rubber>

A carboxyl group-containing acrylic rubber used in the present invention is an acrylic rubber having carboxyl groups; and is not particularly limited as long as it contains in molecules (meth)acrylate monomer units as a principal ingredient and carboxyl groups. Here, a (meth)acrylate monomer means either one of an acrylate monomer and a methacrylate monomer (also the same for methyl (meth)acrylate, and so forth, hereinafter).

Carboxyl groups contained in a carboxyl group-containing acrylic rubber in the present invention react with an aliphatic polyvalent amine compound or a derivative thereof (a cross-linking agent) included in an acrylic rubber composition used in the present invention to act as cross-linkable groups in the acrylic rubber composition, thereby further improving the heat resistance of the acrylic rubber layer (A) and the rubber laminate containing the acrylic rubber layer.

A carboxyl group-containing acrylic rubber used in the present invention may be any one of (a) an acrylic rubber obtained from using α,β-ethylenic unsaturated carboxylic acid monomers as monomers to be used for polymerization, (b) an acrylic rubber obtained from addition reaction of a carbon-to-carbon unsaturated bond-containing compound having carboxyl groups to an acrylic rubber in the presence of a radical initiator, and (c) an acrylic rubber obtained from hydrolyzing into carboxyl groups some of carboxylic acid derivative groups such as carboxylic acid ester groups or acid amide groups included in acrylic rubber molecules.

As a carboxyl group-containing acrylic rubber to be used in the present invention, an acrylic rubber described in (a) mentioned above is preferable. Specifically, polymers containing in molecules 50% to 99.9% by weight of (meth)acrylate monomer units as a principal ingredient and 0.1% to 10% by weight of α,β-ethylenic unsaturated carboxylic acid monomer units are preferable.

(Meth)acrylate monomers forming (meth)acrylate monomer units, which are a principal ingredient of a carboxyl group-containing acrylic rubber to be used in the present invention may be, but are not particularly limited to, for example, alkyl(meth)acrylate monomers, alkoxyalkyl(meth)acrylate monomers, or the like.

The alkyl(meth)acrylate monomers may be, but are not particularly limited to, an ester of (meth)acrylate with alkanol having 1 to 8 carbon atoms. Specifically, methyl (meth)acrylate, ethyl (meth)acrylate, n-propyl (meth)acrylate, isopropyl (meth)acrylate, n-butyl (meth)acrylate, isobutyl (meth)acrylate, n-hexyl (meth)acrylate, 2-ethylhexyl (meth)acrylate, cyclohexyl (meth)acrylate, and so forth may be cited. Thereamong, ethyl (meth)acrylate and n-butyl (meth)acrylate are preferable; and ethyl acrylate and n-butyl acrylate are particularly preferable. One type from among these types may be used alone; two or more types from among these types may be used in combination.

The alkoxyalkyl(meth)acrylate monomers may be, but are not particularly limited to, an ester of (meth)acrylate with an alkoxyalkyl alcohol having 2 to 8 carbon atoms. Specifically, methoxymethyl (meth)acrylate, ethoxymethyl (meth)acrylate, 2-methoxyethyl (meth)acrylate, 2-ethoxyethyl (meth)acrylate, 2-propoxyethyl (meth)acrylate, 2-butoxyethyl (meth)acrylate, 3-methoxypropyl (meth)acrylate, 4-methoxybutyl (meth)acrylate, and so forth may be cited. Thereamong, 2-ethoxyethyl (meth)acrylate and 2-methoxyethyl (meth)acrylate are preferable; and 2-ethoxyethyl acrylate and 2-methoxyethyl acrylate are particularly preferable. One type from among these types may be used alone; two or more types from among these types may be used in combination.

The content of the (meth)acrylate monomer units in a carboxyl group-containing acrylic rubber used in the present invention is preferably 50% to 99.9% by weight, more preferably 60% to 99.5% by weight, and yet more preferably 70% to 99.5% by weight. In a case where the content of the (meth)acrylate monomer units is too small, the weather resistance and the heat resistance of the acrylic rubber layer (A) may be reduced, whereas, in a case where the content is too large, the heat resistance of the acrylic rubber layer (A) may be reduced.

According to the present invention, it is preferable that the (meth)acrylate monomer units include 30% to 100% by weight of alkyl (meth)acrylate monomer units and 70% to 0% by weight of alkoxyalkyl (meth)acrylate monomer units when the total amount of the (meth)acrylate monomer units is taken as 100% of total weight.

The α,β-ethylenic unsaturated carboxylic acid monomers may be, but not particularly limited to, for example, an α,β-ethylenic unsaturated monocarboxylic acid having 3 to 12 carbon atoms, an α,β-ethylenic unsaturated dicarboxylic acid having 4 to 12 carbon atoms, and a monoester of alkanol having 1 to 8 carbon atoms with an α,β-ethylenic unsaturated dicarboxylic acid having 4 to 12 carbon atoms, or the like. Thereamong, from the viewpoint of cross-linkability, a monoester of alkanol having 1 to 8 carbon atoms with an α,β-ethylenic unsaturated dicarboxylic acid having 4 to 12 carbon atoms is preferable. The α,β-ethylenic unsaturated carboxylic acid monomers act as cross-linkable monomer units in the carboxyl group-containing acrylic rubber.

Specific examples of the α,β-ethylenic unsaturated monocarboxylic acid having 3 to 12 carbon atoms include an acrylic acid, a methacrylic acid, an α-ethylacrylic acid, a crotonic acid, and a cinnamic acid.

Specific examples of the α,β-ethylenic unsaturated dicarboxylic acid having 4 to 12 carbon atoms include a butenedioic acid such as a fumaric acid and a maleic acid; an itaconic acid; a citraconic acid; and a chloromaleic acid.

Specific examples of the monoester of alkanol having 1 to 8 carbon atoms with an α,β-ethylenic unsaturated dicarboxylic acid having 4 to 12 carbon atoms include a butenedioic acid mono chain alkyl ester such as monomethyl fumarate, monoethyl fumarate, mono-n-propyl fumarate, monoisopropyl fumarate, mono-n-butyl fumarate, monoisobutyl fumarate, monomethyl maleate, monoethyl maleate, mono-n-propyl maleate, monoisopropyl maleate, mono-n-butyl maleate, or monoisobutyl maleate; a butenedioic acid monoester having an alicyclic structure such as monocyclopentyl fumarate, monocyclohexyl fumarate, monocyclohexenyl fumarate, monocyclopentyl maleate, monocyclohexyl maleate, or a monocyclohexenyl maleate; and itaconic acid monoester such as monomethyl itaconate, monoethyl itaconate, mono-n-butyl itaconate, or monocyclohexyl itaconate.

Thereamong, mono-n-propyl fumarate, monoisopropyl fumarate, mono-n-butyl fumarate, monoisobutyl fumarate, monocyclohexyl fumarate, mono-n-propyl maleate, monoisopropyl maleate, mono-n-butyl maleate, monoisobutyl maleate, and monocyclohexyl maleate are more preferable. Yet more preferable are an α,β-ethylenic unsaturated carboxylic acid having a primary alkyl ester such as mono-n-propyl fumarate, mono-n-butyl fumarate, mono-n-propyl maleate, or mono-n-butyl maleate; and an α,β-ethylenic unsaturated carboxylic acid having a secondary alkyl ester such as monoisopropyl fumarate, monoisobutyl fumarate, monocyclopentyl fumarate, monocyclohexyl fumarate, monoisopropyl maleate, monoisobutyl maleate, monocyclopentyl maleate, or monocyclohexyl maleate. Thereamong, especially preferable from the viewpoint of improving adhesiveness between rubber layers is an α,β-ethylenic unsaturated carboxylic acid having a secondary alkyl ester such as monoisopropyl fumarate, monoisobutyl fumarate, monocyclopentyl fumarate, monocyclohexyl fumarate, monoisopropyl maleate, monoisobutyl maleate, monocyclopentyl maleate, or monocyclohexyl maleate. One type from among these types of α,β-ethylenic unsaturated carboxylic acid monomers may be used alone; two or more types from among these types of α,β-ethylenic unsaturated carboxylic acid monomers may be used in combination. Among the monomers described above, the dicarboxylic acids include those that exist as anhydrides.

The content of the α,β-ethylenic unsaturated carboxylic acid monomer units in a carboxyl group-containing acrylic rubber used in the present invention is preferably 0.1% to 10% by weight, more preferably 0.5% to 7% by weight, and yet more preferably 0.5% to 5% by weight. In a case where the content of the α,β-ethylenic unsaturated carboxylic acid monomer units is too large, the elongation of the acrylic rubber layer (A) after being cross-linked may be reduced or the compression set of the same may be increased, whereas, in a case where the content of the α,β-ethylenic unsaturated carboxylic acid monomer units is too small, the mechanical properties of the acrylic rubber layer (A) after being cross-linked may be insufficient or the heat resistance of the same may be reduced.

The content of the carboxyl groups of a carboxyl group-containing acrylic rubber used in the present invention, i.e., the molar number (ephr) of the carboxyl groups per 100 g of the acrylic rubber, is preferably 4×10⁻⁴ to 4×10⁻¹ (ephr), more preferably 1×10⁻³ to 2×10⁻¹ (ephr), and yet more preferably 5×10⁻³ to 1×10⁻¹ (ephr). In a case where the content of the carboxyl groups is too small, the mechanical properties of the cross-linked acrylic rubber layer (A) may be insufficient or the heat resistance of the same may be reduced; in a case where the content of the carboxyl groups is too large, the elongation of the acrylic rubber layer (A) after being cross-linked may be reduced or the compression set of the same may be increased.

In addition, also from the viewpoint of kneading processability and scorch stability, it is preferable that the carboxyl group-containing acrylic rubber be a carboxyl group-containing acrylic rubber containing an α,β-ethylenic unsaturated carboxylic acid having a secondary alkyl ester.

A carboxyl group-containing acrylic rubber used in the present invention may optionally include other cross-linkable monomer units in addition to α,β-ethylenic unsaturated carboxylic acid monomer units. Cross-linkable monomers forming the other cross-linkable monomer units may be, but are not particularly limited to, for example, monomers having halogen atoms; monomers having epoxy groups; monomers having hydroxyl groups; or the like.

One type from among these types of cross-linkable monomers forming the other cross-linkable monomer units may be used alone; two or more types from among these types of the cross-linkable monomers forming the other cross-linkable monomer units may be used in combination. The content of the other cross-linkable monomer units in a carboxyl group-containing acrylic rubber used in the present invention can be determined as appropriate to the extent of not inhibiting the objects and the effects of the present invention.

Also, a carboxyl group-containing acrylic rubber used in the present invention may optionally include, in addition to the monomer units described above, units of other monomers copolymerizable with the monomers described above.

The copolymerizable other monomers may be, but are not particularly limited to, aromatic vinyl monomers, α,β-ethylenic unsaturated nitrile monomers, monomers each having two or more (meth)acryloyloxy groups (hereinafter which may be referred to as "polyfunctional (meth)acrylic monomers"), olefinic monomers, a vinyl ether compound, or the like.

Specific examples of the aromatic vinyl monomers include styrene, α-methylstyrene, and divinylbenzene. Specific examples of the α,β-ethylenic unsaturated nitrile monomers include acrylonitrile and methacrylonitrile. Specific examples of the polyfunctional (meth)acrylic monomers include ethylene glycol di(meth)acrylate, propylene glycol di(meth)acrylate, and polyethylene glycol di(meth)acrylate. Specific examples of the olefinic monomers include ethylene, propylene, 1-butene, and 1-octene. Specific examples of the vinyl ether compound include vinyl acetate, ethyl vinyl ether, and n-butyl vinyl ether. Thereamong, styrene, acrylonitrile, methacrylonitrile, polyethylene glycol di(meth)acrylate, ethylene, and vinyl acetate are preferable; and acrylonitrile, methacrylonitrile, polyethylene glycol di(meth)acrylate, and ethylene are more preferable.

One type from among these types of copolymerizable other monomers may be used alone; two or more types from among these types of the copolymerizable other monomers may be used in combination. The content of the units of the copolymerizable other monomers in a carboxyl group-containing acrylic rubber used in the present invention is preferably smaller than or equal to 49.9%, more preferably smaller than or equal to 39.5%, and yet more preferably smaller than or equal to 29.5%.

It is preferable to obtain a carboxyl group-containing acrylic rubber used in the present invention from polymerizing monomers described above. In this regard, any one from among emulsion polymerization, suspension polymerization, bulk polymerization, and solution polymerization can be used as a method of the polymerization reaction. Therefrom, emulsion polymerization under atmospheric pressure, which is commonly used as a known method in the prior art for production of an acrylic rubber, is preferable because of, for example, ease of control of polymerization reaction.

Emulsion polymerization may be of any one from among a batch type, a semi-batch type, and a continuous type. The polymerization is carried out normally in a temperature range of 0°C to 70°C, and preferably of 5°C to 50°C. After the polymerization, coagulation and drying are performed, so that a solid carboxyl group-containing acrylic rubber is obtained.

The Mooney viscosity (ML1+4, 100°C) (polymer Mooney) of a carboxyl group-containing acrylic rubber used in the present invention prepared in this manner is preferably 10 to 80, more preferably 20 to 70, and yet more preferably 25 to 60.

### <Aliphatic polyvalent amine compound or derivative thereof>

An aliphatic polyvalent amine compound and a derivative thereof used in the present invention act as cross-linking agents for cross-linking a carboxyl group-containing acrylic rubber as described above. The aliphatic polyvalent amine compound and the derivative thereof are not particularly limited as long as the aliphatic polyvalent amine compound and the derivative thereof are (1) aliphatic compounds having more than one amino groups or (2) substances that, upon cross-linking, become aliphatic compounds having more than one amino groups. Note that an aliphatic polyvalent amine is a compound where an aliphatic group is directly bonded to at least two N atoms; the derivative thereof is a compound where another chemical species is bonded to a chemical species where an aliphatic group is directly bonded to at least two N atoms.

Specific examples of the aliphatic polyvalent amine compound and the derivative thereof include aliphatic polyvalent amine compounds such as a hexamethylene diamine, a triethylene tetramine, a tetraethylene pentamine, a hexamethylene diamine carbamate, a N,N'-dicinnamylidene-1,6-hexane diamine, or a 4,4'-methylene bis cyclohexylamine carbamate; and derivatives thereof; and carbonates of the aliphatic polyvalent amine compounds and the derivatives. Thereamong, a hexamethylene diamine carbamate and a N,N'-dicinnamylidene-1,6-hexane diamine are more preferable because they are more effective in improving the property of adhering through cross-linking between an acrylic rubber layer (A) and a fluororubber layer (B). One type from among these types may be used alone; two or more types from among these types may be used in combination.

In an acrylic rubber composition used in the present invention, the content of the aliphatic polyvalent amine compound or its derivative is preferably 0.05 to 20 parts by weight, more preferably 0.1 to 10 parts by weight, and yet more preferably 0.3 to 5 parts by weight, relative to 100 parts by weight of the carboxyl group-containing acrylic rubber. In a case where the content of the aliphatic polyvalent amine compound or its derivative is too small, cross-linking of the acrylic rubber may be insufficient and it may be impossible to obtain sufficient adhesiveness. In a case where the content of the aliphatic polyvalent amine compound or its derivative is too large, the elongation of the acrylic rubber layer (A) after being cross-linked may be reduced or the compression set of the same may be increased.

### <Other mixing agents>

In addition to above-described ingredients, a mixing agent commonly used in the rubber processing field may be mixed to an acrylic rubber composition used in the present invention. As such a mixing agent, for example, reinforcing filler such as carbon black or silica; non-reinforcing filler such as clay; a cross-linking accelerator; an antiaging agent; a light stabilizer; a plasticizer; a processing aid; a lubricant; an adhesive; a flame retardant; an antimold agent; an antistatic agent; a colorant; a silane coupling agent; a cross-linking retardant; an acid acceptor other than a bismuth oxide; and so forth may be cited. The amount of mixing such a mixing agent is not particularly limited to the extent of not inhibiting the objects and effects of the present invention; the mixing agent may be suitably mixed in an amount suitable for the purposes of the mixing.

The filler is not particularly limited, and a carbon-based material such as carbon black, graphite, or the like can be used. In particular, it is preferable to use carbon black. Specific examples of the carbon black include furnace black, acetylene black, thermal black, channel black, and so forth. Thereamong, it is preferable to use furnace black. Specific examples of the furnace black include SAF, ISAF, ISAF-HS, ISAF-LS, IISAF-HS, HAF, HAF-HS, HAF-LS, MAF, FEF, and so forth. Thereamong, FEF, MAF, and HAF-HS are particularly preferable. Specific examples of the graphite include natural graphite such as vein graphite or flake graphite and artificial graphite. Any type from among the above-described types of carbon-based materials may be used alone; any two or more types from among the above-described types of carbon-based materials may be used in combination.

As the filler other than the carbon-based materials, for example, metal powder such as aluminum powder; inorganic powder such as hard clay, talc, calcium carbonate, titanium oxide, calcium sulfate, calcium carbonate, or aluminum hydroxide; powder such as organic powder such as starch or polystyrene powder; short fibers such as glass fibers (milled fibers), carbon fibers, aramid fibers, or potassium titanate whiskers; silica, mica; and so forth may be cited. Any type from among these types of filler may be used alone; any two or more types from among these types of filler may be used in combination.

In this regard, 40 to 90 parts by weight of such filler is preferable to be added relative to 100 parts by weight of an acrylic rubber in an acrylic rubber composition. In a case where the content of the filler to be added is too small, mechanical properties such as tensile strength may be degraded. In a case where the content of filler to be added is too large, processability during preparation (or during kneading) of the rubber composition may be degraded.

The Cross-linking accelerator is not particularly limited as long as it accelerates cross-linking in combination with the cross-linking agent. As the cross-linking accelerator, for example, an aliphatic monovalent secondary amine compound, an aliphatic monovalent tertiary amine compound, a guanidine compound, an imidazole compound, a quaternary onium salt, a tertiary phosphine compound, a weak-acid alkali metal salt, and a diazabicycloalkene compound may be used. Thereamong, an aliphatic monovalent secondary amine compound, an aliphatic monovalent tertiary amine compound, a guanidine compound, and a diazabicycloalkene compound are preferable. One type from among these types of cross-linking accelerators may be used alone; two or more types from among these types of cross-linking accelerators may be used in combination.

As the antiaging agent, a phenolic, an amine, a phosphate, or a sulfur antiaging agent can be used. Typical examples of the phenolic antiaging agent include 2,2-methylenebis(4-methyl-6-t-butylphenol). Typical examples of the amine antiaging agent include a 4,4-bis(α,α-dimethylbenzyl)diphenylamine. One type from among these types of antiaging agents may be used alone; two or more from among these types of antiaging agents may be used in combination.

Specific examples of the lubricant include, such as a hardened oil, a fatty acid wax, a fatty acid amide wax, a fatty acid ester wax, a fatty alcohol wax, a partial ester wax of a fatty acid and a polyhydric alcohol. One type from among these types of lubricants may be used alone; two or more types from among these types of lubricants may be used in combination.

A method of preparing an acrylic rubber composition used in the present invention may be, but is not limited to, a method where ingredients are kneaded according to a common method. For example, ingredients, other than thermally unstable ingredients such as the aliphatic polyvalent amine compound and the derivative thereof as cross-linking agents, are kneaded with a carboxyl group-containing acrylic rubber. Then, to the thus obtained mixture, the thermally unstable ingredients such as the aliphatic polyvalent amine compound and the derivative thereof are mixed in a short period of time, to obtain a desired composition.

### <Fluororubber layer (B)>

### <Fluororubber composition>

Next, a fluororubber composition for forming a fluororubber layer (B) of a rubber laminate according to the present invention will be described. A fluororubber composition used in the present invention contains at least a polyol-cross-linkable fluororubber.

The polyol-cross-linkable fluororubber is a fluororubber that can be polyol-cross-linkable by a polyol-cross-linking agent. As such a fluororubber, a homopolymer rubber of fluorine-containing unsaturated monomers, a copolymer rubber of fluorine-containing unsaturated monomers, and a copolymer rubber of fluorine-containing unsaturated monomers and copolymerizable other monomers may be cited. As the fluorine-containing unsaturated monomers for forming a polyol-cross-linkable fluororubber, vinylidene fluoride, hexafluoropropylene, tetrafluoroethylene, pentafluoropropylene, trifluoroethylene, trifluorochloroethylene, vinyl fluoride, perfluoromethylvinyl ether, and perfluoroethylvinyl ether; and cross-linkable monomers such as brominated and/or iodinated unsaturated fluorohydrocarbon may be cited. As the other monomers copolymerizable with the fluorine-containing unsaturated monomers, ethylene and propylene may be cited.

According to the present invention, as the fluororubber, a binary copolymer rubber such as vinylidene fluoride-hexafluoropropylene copolymers, tetrafluoroethylene-propylene copolymers, or tetrafluoroethylene-perfluoromethylvinyl ether copolymers; a ternary copolymer rubber such as vinylidene fluoride-hexafluoropropylene-tetrafluoroethylene copolymers; and a rubber obtained from copolymerizing cross-linkable monomers with such a ternary copolymer rubber may be used. Thereamong, a ternary copolymer rubber is preferable from the viewpoint of fuel oil resistance.

According to the present invention, a bismuth oxide is contained in a fluororubber composition for forming a fluororubber layer (B). The bismuth oxide may be a bismuth oxide and also may be a derivative thereof; and can function as an acid acceptor in the fluororubber composition.

According to the present invention, as a result of a bismuth oxide being contained in a fluororubber composition, a satisfactory property of adhering through cross-linking between an acrylic rubber layer (A) and a fluororubber layer (B) can be obtained in an ultimately obtained rubber laminate. In addition, the acid resistance of a fluororubber layer (B) can be improved in a condition where an acrylic rubber layer (A) and the fluororubber layer (B) have been laminated. Therefore, according to the present invention, it is possible to provide a rubber laminate having satisfactory acid resistance and a satisfactory property of adhering through cross-linking between an acrylic rubber layer (A) and a fluororubber layer (B).

A bismuth oxide used in the present invention is not particularly limited as long as it is a bismuth oxide or its derivative; and may be a bismuth oxide or a composite oxide of a bismuth oxide.

Specific examples of the composite oxide of a bismuth oxide include a bismuth nitrate oxide, a bismuth phosphate oxide, a bismuth sulfate oxide, and hydrates of these oxides (for example, hydrous bismuth nitrate). One type from among these types may be used alone; two or more types from among these types may be used in combination. Thereamong, a bismuth oxide and a hydrous bismuth nitrate oxide are preferable from the viewpoint to improve the property of adhering through cross-linking between an acrylic rubber layer (A) and a fluororubber layer (B). A bismuth oxide is more preferable from the viewpoint of improving the acid resistance.

The content of a bismuth oxide for a case where the bismuth oxide is contained in the polyol-cross-linkable fluororubber composition is preferably 0.1 to 50 parts by weight, more preferably 0.5 to 30 parts by weight, and yet more preferably 1 to 20 parts by weight, relative to 100 parts by weight of the polyol-cross-linkable fluororubber. In a case where the content of a bismuth oxide is too small, it may be impossible to obtain the advantageous effect of mixing the bismuth oxide, i.e., the advantageous effect to improve the acid resistance and the advantageous effect to improve the property of adhering through cross-linking between an the acrylic rubber layer (A) and the fluororubber layer (B). In a case where the content of a bismuth oxide is too large, the compression set of the fluororubber layer (B) after being cross-linked may be increased.

The polyol-cross-linkable fluororubber may contain an oxide of a divalent metal and/or a hydroxide of a divalent metal. In such a case, from the viewpoint of water resistance, the content of an oxide of a divalent metal and/or a hydroxide of a divalent metal is preferably smaller than or equal to 5 parts by weight, and more preferably smaller than or equal to 2 parts by weight, relative to 100 parts by weight of the polyol-cross-linkable fluororubber. In this regard, it is yet more preferable that an oxide of a divalent metal and/or a hydroxide of a divalent metal are substantially not included.

A fluororubber composition used in the present invention needs to include a polyol-cross-linking agent for polyol-cross-linking a fluororubber, in addition to ingredients described above, to further improve the advantageous effect of improving the property of adhering through cross-linking between the acrylic rubber layer (A) and the fluororubber layer (B). As such a polyol-cross-linking agent, it is possible to use a known cross-linking agent for polyol-cross-linking a fluororubber. Such a polyol-cross-linking agent is not particularly limited as long as it reacts with a fluororubber to perform cross-linking. Specific examples of the polyol-cross-linking agent include, for example, a polyhydroxy aromatic compound such as 2,2-bis(4-hydroxyphenyl)propane [bisphenol A], 2,2-bis(4-hydroxyphenyl)perfluoropropane [bisphenol AF], 1,3-dihydroxybenzene, 4,4'-dihydroxydiphenyl, 4,4'-dihydroxydiphenylmethane, or 2,2-bis(4-hydroxyphenyl)butane; and an alkaline metal salt thereof and an alkaline earth metal salt thereof. Thereamong, bisphenol such as bisphenol A or bisphenol AF, and an alkaline metal salt thereof and an alkaline earth metal salt thereof are preferable. Thereamong, bisphenol AF is preferable from the viewpoint to improve acid resistance and adhesiveness. One type from among these types may be used alone; two or more types from among these types may be used in combination.

The content of the polyol-cross-linking agent in a fluororubber composition used in the present invention is preferably 0.01 to 10 parts by weight, more preferably 0.05 to 5 parts by weight, and yet more preferably 0.1 to 5 parts by weight, relative to 100 parts by weight of the fluororubber. In a case where the content of the polyol-cross-linking agent is too small, cross-linking of the fluororubber may be insufficient, resulting in reduced acid resistance and adhesiveness. In a case where the content is too large, the elongation of the fluororubber layer (B) after being cross-linked may be reduced.

In addition to ingredients described above, a mixing agent commonly used in the rubber processing field may be mixed to a fluororubber composition used in the present invention. As such a mixing agent, for example, reinforcing filler such as carbon black or silica; an acid acceptor other than a bismuth oxide; a cross-linking accelerator; an antiaging agent; a light stabilizer; a plasticizer; a processing aid; a lubricant; an adhesive; a flame retardant; an antimold agent; an antistatic agent; a colorant; a silane coupling agent; a cross-linking retardant; and so forth may be cited. The amount of mixing such a mixing agent is not particularly limited to the extent of not inhibiting the objects and the effects of the present invention; the mixing agent may be suitably mixed in an amount suitable for the purposes of the mixing.

A method of preparing a fluororubber composition used in the present invention may be, not particularly limited to, a method where ingredients are kneaded according to a common method. For example, the ingredients and the fluororubber are kneaded so that a desired composition can be obtained.

### <Rubber laminate>

A rubber laminate according to the present invention will now be described. A rubber laminate according to the present invention is a laminate of rubbers obtained from adhering through cross-linking an acrylic rubber layer (A) made of an acrylic rubber composition described above with a fluororubber layer (B) made of a polyol-cross-linkable fluororubber composition.

A method of preparing a rubber laminate according to the present invention is, but not limited to, a rubber laminate according to the present invention can be prepared by the following method for example. That is, above-described carboxyl group-containing acrylic rubber composition and polyol-cross-linkable fluororubber composition are formed separately in an uncross-linked state into sheets (a sheet of an acrylic rubber layer (A) and a sheet of a fluororubber layer (B)) having a predetermined area with each thickness of preferably 0.1 to 5 mm, and more preferably 0.5 to 3 mm, according to a known method such as a press molding method, a roll molding method, an extrusion molding method, or the like. Then, by causing the resulting sheets to be in contact with and adhere to one another through pressurized and heated cross-linking using a hot press process or a vulcanizer, a rubber laminate according to the present invention can be obtained. Alternatively, a multilayer extrusion method may be used where an acrylic rubber composition and a fluororubber composition are molded into a laminated tube in an uncross-linked state, followed by a pressurized and heated cross-linking process using a vulcanizer for causing adhesion. The hot press process is typically performed at a temperature of 140-200°C under a pressure of 0.2-15 MPa for 5-60 minutes. In the case of using a vulcanizer, the process is typically performed at a temperature of 130-160°C under a pressure of 0.18 MPa for 30-120 minutes.

Further, heat treatment (postcure) of the resulting rubber laminate may be performed to reduce the cross-linking time taken for performing cross-linking (primary cross-linking) and reduce the compression set of the resulting rubber laminate.

A rubber laminate according to the present invention is not limited to having a configuration where a single acrylic rubber layer (A) and a single fluororubber layer (B) are laminated. As long as including a structure of alternately laminated layers, either one or each of layers (A) and (B) may have a multiple-layer structure. Also, a rubber laminate according to the present invention may include another layer of another material, and such another material may be selected as appropriate depending on the desired properties, intended uses, or the like. Such another material may be, for example, an epichlorohydrin rubber, an acrylonitrile-butadiene rubber, a blend rubber of an acrylonitrile-butadiene rubber with polyvinyl chloride, a chlorosulfonated polyethylene rubber, or the like.

Because a rubber laminate thus obtained in such a manner uses a carboxyl group-containing acrylic rubber, having satisfactory heat resistance, as an acrylic rubber forming an acrylic rubber layer (A), the rubber laminate has satisfactory heat resistance. In addition, the rubber laminate is satisfactory in the property of adhering through cross-linking between the acrylic rubber layer (A) and the fluororubber layer (B) of the rubber laminate. Accordingly, taking advantage of these properties, a rubber laminate according to the present invention is useful as a sealant such as a gasket, a packing, an oil seal, a bearing seal, or the like; a hose such as an oil tube, a fuel hose, an air hose, a turbo air hose, a PCV hose, or an inlet hose; an industrial belt such as a transmission belt or an endless belt; a cushioning medium, a vibration isolating medium; an electric wire sheath; a cover sheet or the like; boots or the like; a dust cover or the like; and so forth, in a wide range of fields such as the field of machines for transportation such as automobiles or the like, the general machinery field, and the electrical equipment field. Thereamong, a rubber laminate according to the present invention can be particularly suited for hose applications.

### [Embodiments]

The present invention will be described in more detail with reference to embodiments, but the present invention is not limited to the embodiments. Hereinafter, "parts" and "percentages" are those by weight unless otherwise specified. Tests and evaluations were performed as follows.

### [Peel Test]

A rubber laminate obtained as mentioned above was used to evaluate the property of adhering through cross-linking between the two layers of the rubber laminate through a peel test according to JIS K6854-3. In more detail, strips were punched out from the obtained rubber laminate each of which has a width of 25.4 mm and a length of 100 mm. A grasping section at an end of the rubber laminate was then fastened to a grasping device of a tensile testing machine, and a 180° peel test was performed at a speed of 50 mm/min, while the load upon the peeling was read by the load cell of the tensile testing machine and the peeling strength (N/mm) was obtained. After the peel test, the percentage of the acrylic rubber left on the surface of the fluororubber was measured. In this regard, it is meant that, the higher the percentage of the acrylic rubber is, that is, the higher the percentage of the rubber breakage is, the better the adhesiveness to the fluororubber is. For a case where the peel strength is higher or for a case where the adhesion interface has a "rubber breakage" state, this means that the rubber laminate has a satisfactory property of adhering through cross-linking.

### [Acid resistance test]

An unvulcanized rubber composition of a polyol-cross-linkable fluororubber was press-molded with a 150×150×2 mm sheet mold at a temperature of 170°C and a surface pressure of 10 MPa for 20 minutes, followed by oven vulcanization (secondary vulcanization) at 170°C for 4 hours. A test piece was punched out from the resulting vulcanized rubber sheet for a volume swelling test and was immersed in a test solution at 80°C for 168 hours to measure the volume swelling. A composition of the test solution was: an aqueous solution containing 50 ppm of a nitric acid, 1500 ppm of a sulfuric acid, 1500 ppm of an acetic acid, 5000 ppm of a formic acid, and 10 ppm of a hydrochloric acid. The pH of the test solution was approximately 2.

### [Production of carboxyl group-containing acrylic rubber]

### [First Production Example]

A polymerization reactor equipped with a thermometer and a stirring device was charged with 200 parts of water, 3 parts of sodium lauryl sulfate, 6 parts of ethyl acrylate, 30 parts of 2-methoxyethyl acrylate, 60 parts of n-butyl acrylate, 1 part of polyethylene glycol dimethacrylate having a weight-average molecular weight of 336, and 3 parts of monocyclohexyl fumarate. Thereafter, after two times of reduced-pressure degassing and nitrogen substitution to adequately remove oxygen, 0.005 parts of cumene hydroperoxide and 0.002 parts of formaldehyde sodium sulfoxylate were added to initiate an emulsion polymerization reaction under the normal pressure and temperature, the reaction was continued until the polymerization conversion rate reached 95%, and a polymerization terminator was added to stop the polymerization. The resulting emulsion polymerization solution was coagulated with an aqueous solution of calcium chloride, washed with water, and dried to obtain a carboxyl group-containing acrylic rubber containing an α,β-ethylenic unsaturated carboxylic acid having a secondary alkyl ester (1). The composition of the resulting carboxyl group-containing acrylic rubber (1) was: 6% of ethyl acrylate monomer units, 30% of 2-methoxyethyl acrylate units, 60% of n-butyl acrylate monomer units, 1% of polyethylene glycol dimethacrylate units with a weight-average molecular weight of 336, and 3% of monocyclohexyl fumarate units (1.5×10⁻² ephr). The polymer Mooney viscosity (ML1+4, 100°C) was 48.

### [Second Production Example]

A polymerization reactor equipped with a thermometer and a stirring device was operated in the same manner as in First Production Example except that 200 parts of water, 3 parts of sodium lauryl sulfate, 58 parts of ethyl acrylate, 40 parts of n-butyl acrylate, and 2 parts of mono-n-butyl fumarate were charged; and a carboxyl group-containing acrylic rubber containing an α,β-ethylenic unsaturated carboxylic acid having a primary alkyl ester (2) was obtained. The composition of the resulting carboxyl group-containing acrylic rubber (2) was: 58% of ethyl acrylate monomer units, 40% of n-butyl acrylate monomer units, and 2% of mono-n-butyl fumarate monomer units (1.6×10⁻² ephr). The polymer Mooney viscosity (ML1+4, 100°C) was 40.

### [Third Production Example]

A polymerization reactor equipped with a thermometer and a stirring device was operated in the same manner as in First Production Example except that 200 parts of water, 3 parts of sodium lauryl sulfate, 48 parts of ethyl acrylate, 48 parts of n-butyl acrylate, and 4 parts of allyl glycidyl ether were charged; and an epoxy group-containing acrylic rubber (3) was obtained. The composition of the epoxy group-containing acrylic rubber (3) was; 48% by weight of ethyl acrylate units, 48% by weight of n-butyl acrylate units, and 4% by weight of allyl glycidyl ether units; the polymer Mooney viscosity (ML1+4, 100°C) was 35.

### [First Embodiment]

### [Preparation of acrylic rubber composition]

Using a Banbury mixer, 100 parts of a carboxyl group-containing acrylic rubber (1) obtained in First Production Example were kneaded at 50°C for 5 minutes after adding of 60 parts of carbon black (filler, product name "Seast SO", made by Tokai Carbon Co., Ltd., "Seast" being the registered trademark); 2 parts of a stearic acid (product name "STEARIC ACID CAMELLIA (beads)", made by NOF Corporation); 1 part of an ester wax (a lubricant (processing aid), product name "Gleck G-8205", made by DIC corporation, "Gleck" being the registered trademark); 2 parts of a 4,4'-bis(α,α-dimethylbenzyl)diphenylamine (an antiaging agent, product name "Nocrack CD", made by Ouchi Shinko Chemical Industrial, "Nocrack" being the registered trademark). The resulting mixture was then transferred to open rolls of 50°C, and 0.5 parts of a hexamethylene diamine carbamate (a cross-linking agent, an aliphatic diamine, product name "Diak #1" made by DuPont) and 2 parts of 1,3-di-o-tolylguanidine (a cross-linking accelerator, product name "Nocceler DT", made by Ouchi Shinko Chemical Industrial, "Nocceler" is the registered trademark) were added and kneaded at 50°C to obtain an acrylic rubber composition A.

### [Preparation of Fluororubber Composition]

20 parts of carbon black (a filler, product name "Thermax MT", made by Cancarb Limited, "THERMAX" being the registered tradename), 2.5 parts of bisphenol AF-based vulcanizer (a mixture containing bisphenol AF and benzyltriphenyl phosphonium salt at a ratio of approximately 3:1, product name "Viton VC #50" made by DuPont), and 10 parts of bismuth oxide (an acid acceptor, product name "Bismuth Oxide S", made by Nihon-kagaku-sangyo) were added to 100 parts of a polyol-cross-linkable fluororubber (product name "Viton AL600", made by Chemours Company, "VITON" being the registered tradename); the mixture was kneaded using open rollers at 50°C, so that a fluororubber composition F was obtained.

### {Manufacture of rubber laminate}

The thus obtained acrylic rubber composition and fluororubber composition were kneaded with open rolls, respectively. Thereafter, respective sheets having uniform thickness of approximately 2 mm were extracted from the resulting products and were molded into sheet-like products each having a size of 6 cm by 10 cm. The sheet-like products were then laminated together and the laminated products were placed into a metal mold having 6 cm in length, 10 cm in width, and 0.4 cm in depth. Then, the laminated products were caused to adhere together through cross-linking at 170°C for 20 minutes while being pressurized with a pressing pressure of 10 MPa, followed by secondary vulcanization at 170°C for 4 hours, to produce a rubber laminate. At this time, in order to prepare for a peel test described above, a cellophane paper sheet was previously inserted at a portion to be grasped between the sheet products to leave the portion where the sheet products did not adhere together. The resulting rubber laminate was then used for the peel test. The results are shown in Tables 1-3.

### [Second Embodiment]

An acrylic rubber composition B was prepared in the same manner as First Embodiment, except that, in preparing the acrylic rubber composition, instead of 0.5 parts of a hexamethylene diamine carbamate, 1.08 parts of a N,N'-dicinnamylidene-1,6-hexamethylene diamine (a cross-linking agent, aliphatic diamine derivative, product name "Diak #3", made by DuPont) was added; and a rubber laminate was prepared. The results of the tests and evaluations are shown in Tables 1-3.

### [Third Embodiment]

An acrylic rubber composition C was prepared in the same manner as First Embodiment, except that, in preparing the acrylic rubber composition, instead of the carboxyl group-containing acrylic rubber (1), 100 parts of the carboxyl group-containing acrylic rubber (2) obtained in Second Production Example was used; and a rubber laminate was prepared. The results of the tests and evaluations are shown in Tables 1-3.

### [Fourth Embodiment]

A fluororubber composition G was prepared in the same manner as First Embodiment, except that, in preparing the fluororubber composition, instead of the bismuth oxide, 15 parts of a hydrous bismuth nitrate oxide (an acid acceptor, product name "IXE-550", made by Toagosei) was added; and a rubber laminate was prepared. The results of the tests and evaluations are shown in Tables 1-3.

### [Fifth Embodiment]

A fluororubber composition G was prepared in the same manner as Second Embodiment, except that, in preparing the fluororubber composition, instead of the bismuth oxide, 15 parts of the hydrous bismuth nitrate oxide was added; and a rubber laminate was prepared. The results of the tests and evaluations are shown in Tables 1-3.

### [Sixth Embodiment]

A fluororubber composition G was prepared in the same manner as Third Embodiment, except that, in preparing the fluororubber composition, instead of the bismuth oxide, 15 parts of the hydrous bismuth nitrate oxide was added; and a rubber laminate was prepared. The results of the tests and evaluations are shown in Tables 1-3.

### [First Comparative example]

An acrylic rubber composition D was prepared in the same manner as First Embodiment, except that, in preparing the acrylic rubber composition, instead of a hexamethylene diamine carbamate, 1.28 parts of 2,2-bis[4-(4-aminophenoxy)phenyl]propane (a cross-linking agent, an aromatic diamine, product name "BAPP", made by Wakayama Seika Kogyo Co., Ltd.) was added; and a rubber laminate was prepared. The results of the tests and evaluations are shown in Tables 1-3.

### [Second Comparative Example]

An acrylic rubber composition E was prepared in the same manner as First Embodiment, except that, in preparing the acrylic rubber composition, instead of the carboxyl group-containing acrylic rubber (1), 100 parts of the carboxyl group-containing acrylic rubber (3) obtained in Third Production Example was used and the amount of a hexamethylene diamine carbamate to be added was 0.9 parts; and a rubber laminate was prepared. The results of the tests and evaluations are shown in Tables 1-3.

### [Third Comparative Example]

A fluororubber composition H was prepared in the same manner as First Embodiment, except that, in preparing the fluororubber composition, instead of the bismuth oxide, 3 parts of magnesium oxide (an acid acceptor, product name "Kyowamag #150" made by Kyowa Chemical Industry Co., Ltd.) and 6 parts of calcium hydroxide (an acid acceptor, product name "Caldic #1000" made by Ohmi Chemical Industry Co., Ltd.) were added; and a rubber laminate was prepared. The results of the tests and evaluations are shown in Tables 1-3.

### [Fourth Comparative Example]

A fluororubber composition I was prepared in the same manner as First Embodiment, except that, in preparing the fluororubber composition, the bismuth oxide was not added; and a rubber laminate was prepared. The results of the tests and evaluations are shown in Tables 1-3.

### [Fifth Comparative Example]

A fluororubber composition J was prepared in the same manner as First Embodiment, except that, in preparing the fluororubber composition, instead of the polyol-cross-linkable fluororubber, 100 parts of peroxide-cross-linkable fluororubber (product name "Viton GF600S", made by Chemours Company) were mixed, the mixture of bisphenol AF and benzyltriphenyl phosphonium salt was not added, and 1.5 parts of 2,5-dimethyl-2,5-di(t-butylperoxy)hexane (product name "Perhexa 25B-40", made by NOF Corporation) and 3 parts of triallyl isocyanurate (product name "TAIC", made by Nihon Kasei Co., Ltd., "TAIC" being the registered trademark) were added in addition to the bismuth oxide; and a rubber laminate was prepared. The results of the tests and evaluations are shown in Tables 1-3.

**[Table 1]**

| acrylic rubber composition | formulation | | | | |
|---|---|---|---|---|---|
| | A | B | C | D | E |
| carboxyl group-containing acrylic rubber (1) containing *α*,*β*-ethylenic unsaturated carboxylic acid having secondary alkyl ester | 100 | 100 | | 100 | |
| | | | | | |
| carboxyl group-containing acrylic rubber (2) containing *α*,*β*-ethylenic unsaturated carboxylic acid having primary alkyl ester | | | 100 | | |
| | | | | | |
| epoxy group-containing acrylic rubber (3) | | | | | 100 |
| carbon black | 60 | 60 | 60 | 60 | 60 |
| stearic acid | 2 | 2 | 2 | 2 | 2 |
| processing aid (lubricant) | 1 | 1 | 1 | 1 | 1 |
| antiaging agent | 2 | 2 | 2 | 2 | 2 |
| hexamethylene diamine carbamate (aliphatic diamine) | 0.5 | | 0.5 | | 0.9 |
| | | | | | |
| N,N'-dicin-namylidene-1,6-hexamethylene diamine (aliphatic diamine) | | 1.08 | | | |
| | | | | | |
| 2,2-bis[4-(4-aminophenoxy)phenyl]propane (aromatic diamine) | | | | 1.28 | |
| | | | | | |
| guanidine cross-linking accelerator | 2 | 2 | 2 | 2 | 2 |

**[Table 2]**

| fluororubber composition | formulation | | | | |
|---|---|---|---|---|---|
| | F | G | H | I | J |
| polyol-cross-linkable fluororubber | 100 | 100 | 100 | 100 | |
| | | | | | |
| peroxide-cross-linkable fluororubber | | | | | 100 |
| | | | | | |
| carbon black | 20 | 20 | 20 | 20 | 20 |
| | | | | | |
| mixture of bisphenol AF and benzyltriphenyl phosphonium salt | 2.5 | 2.5 | 2.5 | 2.5 | |
| | | | | | |
| bismuth oxide | 10 | | | | 10 |
| | | | | | |
| hydrous bismuth nitrate oxide | | 15 | | | |
| | | | | | |
| magnesium oxide | | | 3 | | |
| | | | | | |
| calcium hydroxide | | | 6 | | |
| | | | | | |
| 2,5-dimethyl-2,5-di(t-butylperoxy)hexane | | | | | 1.5 |
| | | | | | |
| triallyl isocyanurate | | | | | 3 |

**[Table 3]**

| | outer layer | inner layer | acid resistance evaluation | adhesion evaluation | |
|---|---|---|---|---|---|
| | acrylic rubber composition | fluororubber composition | swelling to acidic aqueous solution of fluororubber (%) | peel strength (N/mm) | percentage of acrylic rubber left on surface of fluororubber (%) |
| first embodiment | A | F | 2.7 | 3.5 | 100 |
| second embodiment | B | F | 2.7 | 3.2 | 100 |
| third embodiment | C | F | 2.7 | 2.9 | 70 |
| fourth embodiment | A | G | 3.1 | 3.2 | 100 |
| fifth embodiment | B | G | 3.1 | 3.3 | 100 |
| sixth embodiment | C | G | 3.1 | 2.8 | 70 |
| first comparative example | D | F | 2.7 | 1.5 | 0 |
| second comparative example | E | F | 2.7 | 0.9 | 0 |
| third comparative example | A | H | 107 | 3.0 | 100 |
| fourth comparative example | A | I | - | - | - |
| fifth comparative example | A | J | 5 | 2.0 | 30 |

From Tables 1-3, rubber laminates each obtained from adhering through cross-linking an acrylic rubber layer (A) formed by adding an aliphatic polyvalent amine compound or a derivative thereof to a carboxyl group-containing acrylic rubber as a cross-linking agent and a fluororubber layer (B) formed by adding a bismuth oxide as an acid acceptor to a polyol-cross-linkable fluororubber were satisfactory in both acid resistance and adhesiveness (First through Sixth Embodiments).

In contrast thereto, each of rubber laminates of acrylic rubber layers and fluororubber layers where either one of an acrylic rubber layer (A) formed by adding an aliphatic polyvalent amine compound or a derivative thereof to a carboxyl group-containing acrylic rubber as a cross-linking agent and a fluororubber layer (B) formed by adding a bismuth oxide as an acid acceptor to a polyol-cross-linkable fluororubber was not used was unsatisfactory in at least either one of acid resistance and adhesiveness (First through Fifth Comparative Examples).

Although the modes for carrying out the present invention have been described above, the present invention is not limited to specific modes for carrying out the present invention or embodiments; various modifications and changes can be made within the scope of the claimed invention.

The present international application claims priority to Japanese Patent Application No. 2017-69242 filed March 30, 2017, the entire contents of which are hereby incorporated herein by reference.

## Claims

1. A rubber laminate comprising:
an acrylic rubber layer (A) including an acrylic rubber composition including at least a carboxyl group-containing acrylic rubber and an aliphatic polyvalent amine compound or a derivative of the aliphatic polyvalent amine compound; and
a fluororubber layer (B) including a fluororubber composition including at least a polyol-cross-linkable fluororubber and a bismuth oxide,
the acrylic rubber layer (A) and the fluororubber layer (B) being made to adhere to one another through cross-linking.

2. The rubber laminate as claimed in claim 1,
wherein
the carboxyl group-containing acrylic rubber includes monoester monomer units including an α,β-ethylenic unsaturated dicarboxylic acid having a carbon number of 4 to 12 and alkanol having a carbon number of 1 to 8.

3. The rubber laminate as claimed in claim 2,
wherein
the carboxyl group-containing acrylic rubber includes α,β-ethylenic unsaturated carboxylic acid monomer units having a secondary alkyl ester.

4. A hose using the rubber laminate claimed in any one of claims 1-3.
